# EUROPÄISCHE PATENTSCHRIFT

(11) **EP 1 099 865 B1**
(45) Veröffentlichungstag und Bekanntmachung des Hinweises auf die Patenterteilung: **15.11.2006**
(21) Anmeldenummer: 00120063.3
(22) Anmeldetag: 15.09.2000
(51) Int. Cl.: F16B 19/10, B60R 13/02, B60R 13/04, F16B 5/12

(54) **Zierleistenbefestigung, insbesondere für Kraftwagen**
Trim fastening especially for motor vehicles
Fixation pour enjoliveur notamment pour véhicules automobiles

(30) Priorität: 11.11.1999 DE 19954293
(43) Veröffentlichungstag der Anmeldung: 16.05.2001
(73) Patentinhaber: Dr.Ing. h.c.F. Porsche Aktiengesellschaft, 70435 Stuttgart (DE)
(72) Erfinder: Schlachter, Reimund, 75417 Mühlacker (DE)

(56) Entgegenhaltungen:
- DE-C- 4 117 114
- DE-C- 4 223 563

## Beschreibung

Die Erfindung bezieht sich auf eine Zierleistenbefestigung, insbesondere für Kraftwagen, gemäß dem Oberbegriff des Patentanspruchs 1.

Eine gattungsgemäße Zierleistenbefestigung ist aus der DE 41 17 114 C1 bekannt. Diese weist einen Fußteil auf, der in eine Öffnung eines Bleches einsetzbar ist. Am Fußteil ist ein umlaufender Ringkragen ausgebildet, der auf dem Blech zu liegen kommt. Auf dem Ringkragen liegt eine Auflageplatte an, die an einem Spreizstift angeordnet ist, der in eine zentrale Bohrung am Fußteil einsetzbar ist. An der Auflageplatte ist ein Kopfstück ausgebildet, an dem eine Zierleiste befestigbar ist. Nachteilig bei dieser Zierleistenbefestigung ist, dass der Spreizstift nicht ohne weiteres entfernt werden kann bzw. das Blech beschädigt wird, wenn zwischen dem Blech und der Auflageplatte ein Werkzeug eingesetzt wird.

Bei einer bekannten Zierleistenbefestigung ist ein aus Kunststoff bestehender Befestigungsclip mittels eines geschlitzten Fußteiles in eine Öffnung eines Bleches oder dergleichen einsetzbar und dort durch einen in eine zentrale Bohrung des Befestigungsclipses einführbaren Spreizstift festlegbar. Der Befestigungsclip liegt mit einer Auflageplatte auf der dem Fußteil abgekehrten Seite des Bleches an und weist im Abstand von der Auflageplatte ein Kopfstück auf, das von der Zierleiste wenigstens teilweise umgriffen wird.

Dieser Zierleistenbefestigung haftet der Nachteil an, daß der Spreizstift des Befestigungsclipses nicht wieder verwendbar ist, da er bei der Demontage des Befestigungsclipses nur in Einschubrichtung bewegt werden kann, bis er sich vom Befestigungsclip löst und in den angrenzenden, meist unzugänglichen Karosseriehohlraum fällt. Dort kann er im Fahrbetrieb unerwünschte Geräusche verursachen. Bei Wiederverwendung des Befestigungsclip muß ein neuer Spreizstift in die zentrale Bohrung des Befestigungsclipses eingesetzt werden.

Aufgabe der Erfindung ist es, eine Zierleistenbefestigung der eingangs genannten Gattung so weiterzubilden, daß der komplette Befestigungsclip einschließlich des Spreizstiftes wieder verwendbar ist.

Erfindungsgemäß wird diese Aufgabe durch die Merkmale des Anspruchs 1 gelöst. Weitere, die Erfindung in vorteilhafter Weise ausgestaltende Merkmale sind in den Unteransprüchen enthalten.

Die mit der Erfindung hauptsächlich erzielten Vorteile sind darin zu sehen, daß durch die Aussparung am Kopfstück und durch zumindest eine schlitzartige Ausnehmung am Spreizstift eine Demontage des Spreizstiftes entgegen der Einschubrichtung des Spreizstiftes mittels eines Hilfswerkzeuges ermöglicht wird, so daß der komplette Befestigungsclip wieder verwendbar ist. Unerwünschte Geräusche im Fahrbetrieb aufgrund frei herumliegender Spreizstifte in nicht zugänglichen Karosseriehohlräumen werden somit vermieden.

Ein Ausführungsbeispiel der Erfindung ist in der Zeichnung dargestellt und wird im folgenden näher erläutert.

Es zeigen
- Fig. 1: eine Seitenansicht auf einen Befestigungsclip für eine Zierleiste,
- Fig. 2: eine Draufsicht auf den Befestigungsclip,
- Fig. 3: einen Schnitt nach der Linie III-III der Fig. 2 durch den Befestigungsclip
- Fig. 4: einen Schnitt entsprechend Fig. 3 mit eingetriebenem Spreizstift und

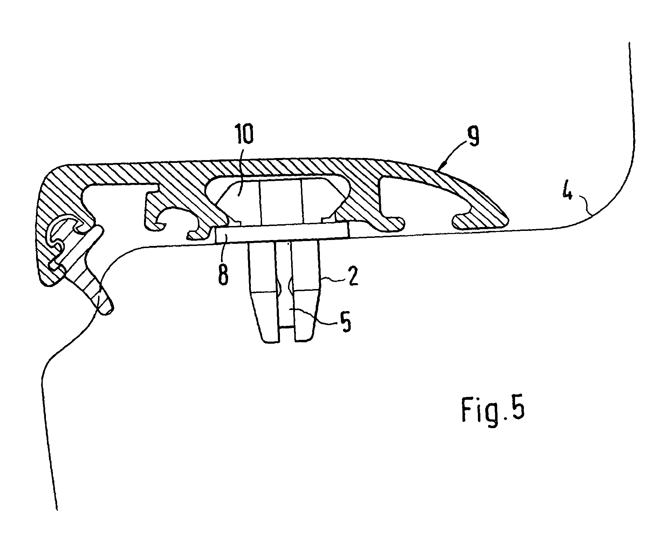

- Fig. 5: einen Schnitt nach der Linie V-V der Fig. 2 durch die montierte Zierleiste und den Befestigungsclip.

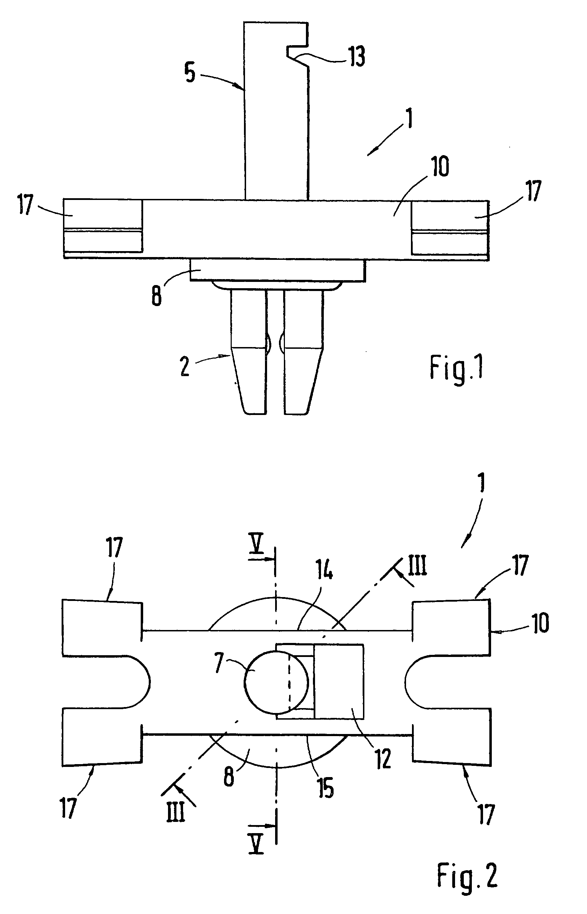

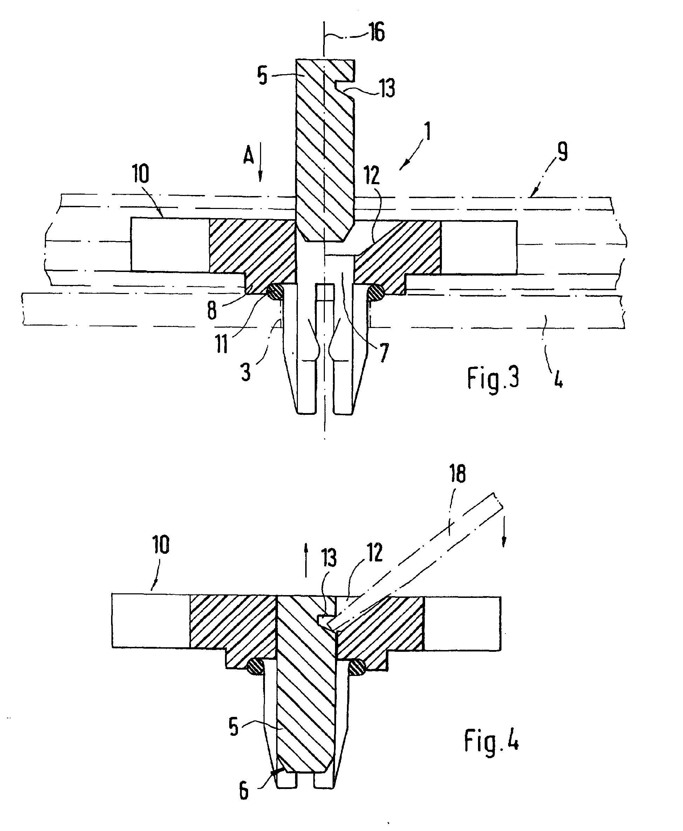

Der in der Zeichnung dargestellte Befestigungsclip 1 aus Kunststoff weist ein geschlitztes Fußteil 2 auf, das in eine Öffnung 3 eines Bleches 4 bzw. eines Trägerteiles eingesetzt ist und dort durch Eintreiben des in Fig. 3 angedeuteten Spreizstiftes 5 festgelegt werden kann. Der zylindrische Spreizstift 5 ist in Einschubrichtung A gesehen an seinem vorderen Ende zur Erleichterung des Einführens mit einer Anschrägung 6 versehen und ist in eine zentrale Bohrung 7 des Befestigungsclipses 1 einführbar. Der Spreizstift 5 weist an seinem hinteren Ende keinen vergrößerten Kopfbereich auf. In den Fig. 1 und 3 ist der Spreizstift 5 im noch nicht eingetriebenen Zustand dargestellt.

An das obere Ende des Fußteiles 2 schließt sich eine Auflageplatte 8 an, die auf der dem Fußteil 2 abgekehrten Seite des Bleches 4 aufliegt. Die Auflageplatte 8 ist im Ausführungsbeispiel kreisförmig ausgebildet, wobei der Außendurchmesser der Auflageplatte 8 größer ist als die im Blech 4 vorgesehene Öffnung 3. Durch die Auflageplatte 8 wird erreicht, daß die Zierleiste 9 nicht direkt auf dem Blech 4 aufliegt, sondern mit geringem Abstand zu diesem verläuft. An der Unterseite der Auflageplatte 8 ist in eine Nut ein das Fußteil 2 umgebender Dichtring 11 eingesetzt, der sich an einer Seite des Bleches 4 abstützt. Der Befestigungsclip 1 weist im Abstand zur Auflageplatte 8 ein langgestrecktes Kopfstück 10 auf, das bei aufgeclipster Zierleiste 9 wenigstens teilweise umgriffen wird.

Erfindungsgemäß ist vorgesehen, daß das Kopfstück 10 örtlich eine bis zur Bohrung 7 bzw. zum eingetriebenen Spreizstift 5 reichende Aussparung 12 aufweist und daß am Spreizstift 5 zumindest eine mit der Aussparung 12 fluchtende schlitzartige Ausnehmung 13 angeordnet ist, so daß bei abgenommener Zierleiste 9 eine Demontage des Spreizstiftes 5 entgegen der Einschubrichtung A mittels eines Hilfswerkzeuges ermöglicht wird. Als Hilfswerkzeug ist vorzugsweise ein Schraubendreher 18 vorgesehen. In Fig. 4 ist der eingetriebene, etwa bündig mit der Oberseite des Kopfstücks 10 verlaufende Spreizstift 5 und der eingesetzte Schraubendreher 18 zur Demontage des Spreizstiftes 5 gezeigt.

Die Aussparung 12 ist gemäß Fig. 3 an der Oberseite des Kopfstückes 10 ausgebildet und etwa rechteckförmig gestaltet. Entsprechend Fig. 2 ist die Aussparung 12 seitlich an die zentrale Bohrung 7 angeschlossen. Die Aussparung 12 könnte auch an einer der beiden Längsseiten 14, 15 des Kopfstückes 10 vorgesehen sein.

Die zumindest eine schlitzartige Ausnehmung 13 ist etwa rechtwinkelig zur Längsachse 16 des Spreizstiftes 5 ausgerichtet. Am Spreizstift 5 können auch mehrere, mit axialem Abstand zueinander angeordnete Ausnehmungen 13 ausgebildet sein.

Im Ausführungsbeispiel ist in einem oberen Randbereich des Spreizstiftes 5 eine schlitzartige Ausnehmung 13 ausgebildet. Diese erstreckt sich nur in einem Teilbereich des Umfangs des Spreizstiftes 5. Das Kopfstück 10 weist an beiden längsseitigen Enden jeweils zwei beabstandete federnde Aufnahmeabschnitte 17 für die aufclipsbare Zierleiste 9 auf.

## Patentansprüche

1. Zierleistenbefestigung, insbesondere für Kraftwagen, mit einem Befestigungsclip, der über ein Fußteil in eine Öffnung eines Bleches oder dergleichen einsetzbar und dort durch einen in eine zentrale Bohrung des Befestigungsclipses eintreibbaren Spreizstift festlegbar ist, wobei der Befestigungsclip eine Auflageplatte und im Abstand davon ein Kopfstück aufweist, das von der Zierleiste wenigstens teilweise umgriffen wird, **dadurch gekennzeichnet, daß** am Kopfstück (10) örtlich eine bis zum Spreizstift (5) ragende Aussparung (12) vorgesehen ist und daß am Spreizstift (5) eine oder mehrere schlitzartige Ausnehmungen (13) angeordnet sind so daß eine Demontage des Spreizstiftes (5) entgegen der Einschubrichtung (A) mittels eines Hilfswerkzeuges ermöglicht wird.

2. Zierleistenbefestigung nach Anspruch 1, **dadurch gekennzeichnet, daß** die zumindest eine schlitzartige Ausnehmung (13) etwa rechtwinkelig zur Längsachse (16) des Spreizstiftes (5) ausgerichtet ist.

3. Zierleistenbefestigung nach den Ansprüchen 1 und 2, **dadurch gekennzeichnet, daß** am Spreizstift (5) mehrere mit axialem Abstand zueinander angeordnete schlitzartige Ausnehmungen (13) ausgebildet sind.

4. Zierleistenbefestigung nach einem der vorangegangenen Ansprüche, **dadurch gekennzeichnet, daß** sich die schlitzartigen Ausnehmungen (13) nur in einem Teilbereich des Umfangs des Spreizstiftes (5) erstrecken und mit ihren offenen Seiten der Aussparung (12) zugewandt sind.

5. Zierleistenbefestigung nach Anspruch 1, **dadurch gekennzeichnet, daß** die Aussparung (12) an einer Längsseite (14, 15) des Kopfstückes (10) oder an die zentrale Bohrung (7) seitlich anschließend zwischen den beiden Längsseiten (14, 15) des Kopfstückes (10) vorgesehen ist.

6. Zierleistenbefestigung nach Anspruch 1 oder 5, **dadurch gekennzeichnet, daß** die Aussparung (12) an der Oberseite des Kopfstückes (10) ausgebildet ist.

## Claims

1. A trim-strip fastening, especially for motor vehicles, with a fastening clip which is insertable by a foot part into an opening in a panel or the like, where it is securable by an expanding pin which is drivable into a central bore in the fastening clip, wherein the fastening clip has a supporting plate and, spaced apart therefrom, a head piece which is at least partly surrounded by the trim strip, **characterised in that** an opening (12) extending as far as the expanding pin (5) is locally provided in the head piece (10) and **in that** one or more slot-type recesses (13) are provided in the expanding pin (5) so as to enable the expanding pin (5) to be removed counter to the insertion direction (A) by means of an auxiliary tool.

2. A trim-strip fastening according to claim 1, **characterised in that** the at least one slot-type recess (13) extends approximately at right angles to the longitudinal axis (16) of the expanding pin (5).

3. A trim-strip fastening according to claims 1 and 2, **characterised in that** a plurality of slot-type recesses (13) arranged with mutual axial spacing are formed in the expanding pin (5).

4. A trim-strip fastening according to any one of the preceding claims, **characterised in that** the slot-type recesses (13) extend only over part of the circumference of the expanding pin (5), and their open sides face the opening (12).

5. A trim-strip fastening according to claim 1, **characterised in that** the opening (12) is provided on one longitudinal side (14, 15) of the head piece (10) or between the two longitudinal sides (14, 15) of the head piece (10) so as to be laterally adjacent to the central bore (7).

6. A trim-strip fastening according to claim 1 or 5, **characterised in that** the opening (12) is formed in the upper surface of the head piece (10).

## Revendications

1. Fixation d'une baguette d'enjoliveur, en particulier pour véhicule automobile, avec un clips de fixation qui peut être inséré par une partie formant un pied, dans une ouverture d'une tôle ou similaire, et peut y être fixé par une goupille à expansion à introduire dans un perçage central du clips de fixation, le clips de fixation comportant une plaque d'appui et à distance de celle-ci une pièce formant une tête qui est entourée au moins en partie par la baguette d'enjoliveur, **caractérisée en ce qu'**il est prévu localement sur la tête (10), une découpe (12) s'étendant jusqu'à la goupille à expansion (5), et **en ce que** sur la goupille à expansion (5) sont disposés un ou plusieurs évidements (13) de type fente, ce qui permet un démontage de la goupille à expansion (5) dans le sens contraire au sens d'introduction (A), au moyen d'un outil auxiliaire.

2. Fixation de baguette d'enjoliveur selon la revendication 1, **caractérisée en ce que** le au moins un évidement (13) de type fente est orienté à peu près perpendiculairement à l'axe longitudinal (16) de la goupille à expansion (5).

3. Fixation de baguette d'enjoliveur selon les revendications 1 et 2, **caractérisée en ce que** sur la goupille à expansion (5) sont réalisés plusieurs évidements (13) de type fente, disposés à distance axiale les uns des autres.

4. Fixation de baguette d'enjoliveur selon l'une des revendications précédentes, **caractérisée en ce que** les évidements (13) de type fente ne s'étendent que dans une zone partielle de la circonférence de la goupille à expansion (5) et sont tournés par leur côté ouvert vers la découpe (12).

5. Fixation de baguette d'enjoliveur selon la revendication 1, **caractérisée en ce que** la découpe (12) est prévue sur un côté longitudinal (14, 15) de la tête (10) ou à côté du perçage central (7), entre les deux côtés longitudinaux (14, 15) de la tête (10).

6. Fixation de baguette d'enjoliveur selon la revendication 1 ou 5, **caractérisée en ce que** la découpe (12) est réalisée sur le côté supérieur de la tête (10).
